Europäisches Patentamt

**European Patent Office**

**Office européen des brevets**

(19)

(11) Publication number: **0 083 119**
**A1**

(12) # EUROPEAN PATENT APPLICATION

(21) Application number: **82201296.9**

(22) Date of filing: **16.10.82**

(51) Int. Cl.³: **B 65 G 17/38**
**B 65 G 17/08, F 16 G 15/12**

(30) Priority: **22.12.81 IT 3492181 U**

(43) Date of publication of application:
**06.07.83 Bulletin 83/27**

(84) Designated Contracting States:
**AT BE CH DE FR GB IT LI LU NL SE**

(71) Applicant: **MARBETT S.n.c. di Mariani, Bettati & C.**
**4 Via dell'Industria**
**I-42015 Correggio Emilia (Reggio Emilia)(IT)**

(72) Inventor: **Bettati, Tienno**
**3, Via E. Fermi**
**I-42015 Corregio Emilia Reggio Emilia(IT)**

(74) Representative: **Corradini, Corrado**
**4, Via Sessi**
**I-42100 Reggio Emilia(IT)**

(54) Conveyor chain with an anti-wear covering.

(57) A conveyor chain comprising synthetic resin links which are articulated both in the plane in which they lie and in the plane orthogonal thereto, their upper working face (6) being covered by a plate (13) of wear-resistant material such as steel. The plate is fixed to the upper surface of the link either by a lower rivet (14) or by an inwardly projecting front rim (150), and by two rear appendices (17) comprising bores (18) which are mounted over the hinge pin (5) of the link. The plate (13) corresponds to the upper shape of the link.

Fig. 1.

EP 0 083 119 A1

Croydon Printing Company Ltd

- 1 -

CONVEYOR CHAIN WITH AN ANTI-WEAR COVERING

This industrial utility model patent relates to an improved conveyor chain which is provided on its working surface with a covering of hard material for the purpose of extending its life.

In the most diverse industrial sectors, it is well known that production plants comprising a series of operating stations are provided with suitable conveyors for feeding and unloading said operating stations.

Chains are widely used inter alia for said conveying and unloading/loading operations, and which besides bending back on themselves to form endless loops can also bend orthogonally to the plane in which the corresponding loop lies in order to define curves.

Chains of this type are known in which the component elements or links are constituted by a profiled member moulded from synthetic material.

More specifically, the links of such known chains comprise an open ring-shaped head, from the ends of which there branch two profiled arms which widen outwards from said open ring.

Transversely to said two arms there is provided a pin for hinging the next chain link, of which the head, which is thus inserted between the two arms, can rotate both about the hinge pin, and in its own plane by virtue of two slotted passages provided in the two opposing terminal zones of said open ring.

Inside the head there is housed a cylindrical member which is mounted on the hinge pin by way of a suitable transverse bore, and on which the teeth of the sprockets act for driving and deviating the chain.

Finally, on the outside of the link, i.e. in a position corresponding with its working surface, there is provided a wall which closes the open ring and part of the gap existing between the two profiled arms.

These known types of conveyor chains, which are formed from synthetic material as stated, suffer from the drawback of very rapid wear, in particular when used for conveying objects, pieces and materials having rough surfaces and/or sharp edges.

The present patent provides and protects a conveyor chain of synthetic material which is able to obviate the aforesaid, in that its working or conveying surface has high mechanical characteristics, with particular reference to hardness and anti-wear characteristics.

According to the invention, the proposed chain is of the aforesaid type, i.e. comprising synthetic material links of fork configuration which are partly closed on the working surface by a wall, and which are individually provided with a covering of hard material which covers practically their entire conveying surface, thus extending their life.

Said covering according to the invention is in the form of a profiled plate of stainless or surface-treated steel, which is fixed to the corresponding link both at said wall, for example by means of a deformable integral projection, and at the pin which hinges said link to the next one.

These and further characteristics of the invention will be more apparent from the detailed description given hereinafter with reference to the figures of the accompanying drawings, in which:

Figure 1 is an exploded perspective view of a link of the chain in question;

Figure 2 is a plan projection of two chain links;

Figure 3 is a section on the line III-III of Figure 2;

Figure 4 is a partial section similar to the preceding, showing a different configuration of the front end of the protective covering of the invention;

Figure 5 is a section on the line V-V of Figure 3.

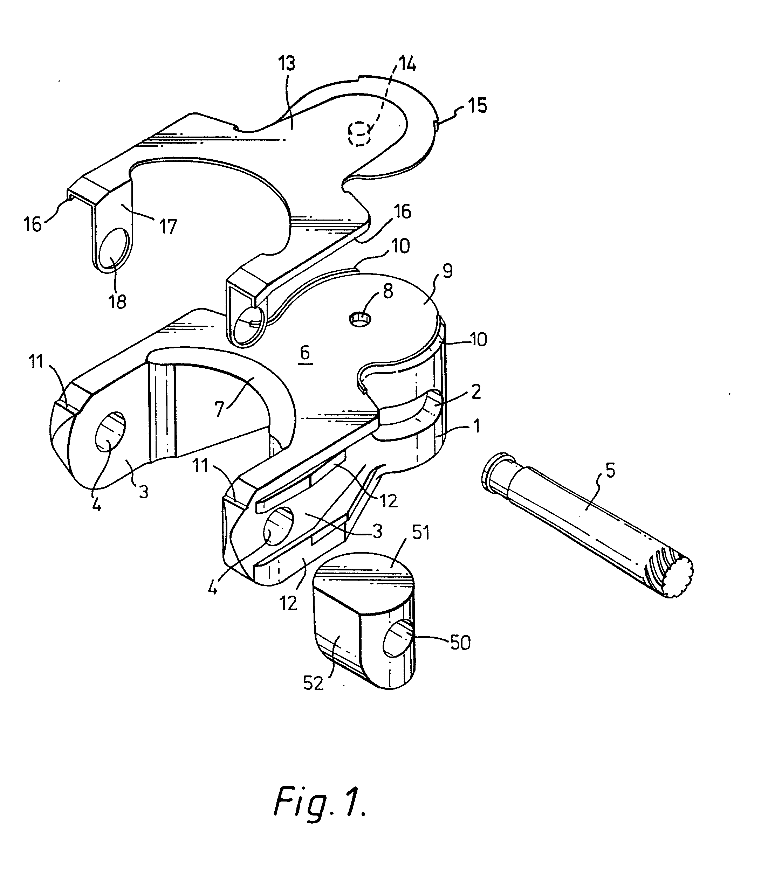

From said figures it can be seen that the conveyor chain in question is composed of a plurality of links of the type shown in Figure 1.

Said link comprises a type of hollow cylindrical head 1 which when viewed in plan projection is of open ring configuration. In the opposing portions of the cylindrical wall of said open ring 1 there are provided two slotted apertures 2 which lie in a plane parallel to the plane in which the link lies.

Two equal profiled arms 3 branch from the opposing ends of the open ring 1, and comprise two initial portions which open outwards from the longitudinal axis of the link, and two parallel terminal portions.

When viewed in plan projection, the body of the link is substantially in the form of a V, with a hemispherical vertex and profiled arms.

Said two terminal portions of the profiled arms are provided with two transverse bores 4, coplanar to the apertures 12, for receiving and locking a hinge pin 5, which is also inserted through a transverse bore 50 of a cylindrical member 51 (Figure 1), this latter being housed in the open ring.

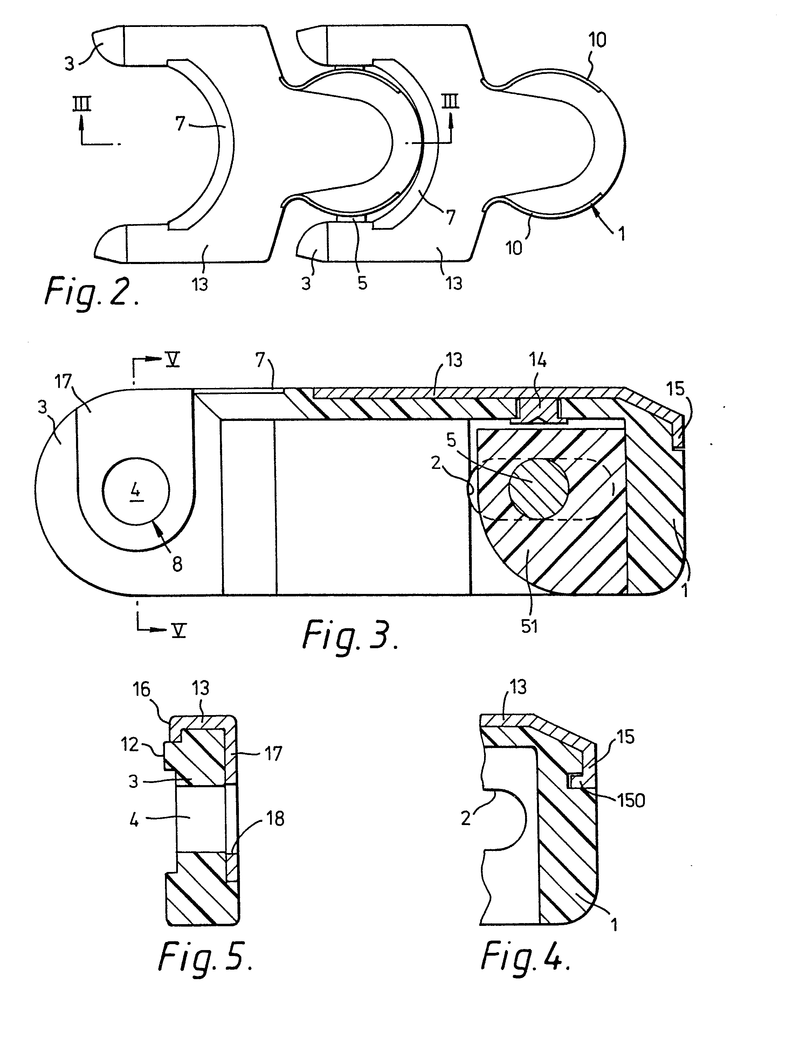

In this manner, as is clearly shown in Figure 2, the head 1 of one chain link is inserted between the profiled arms of another link, and the two links are connected together by a respective pin 5.

Consequently, by virtue of the slotted apertures 2, of which the width is practically equal to the diameter of the pin 5, one link can swivel relative to the other both about the axis of the pin 5 and about the longitudinal axis of the cylindrical member 51.

On that side facing the free ends of the profiled arms 3, the cylindrical member 51 comprises a longitudinal flattened portion 52, which connects to the free base of said cylindrical member.

The sprockets which drive and deviate the chain act against these cylindrical members in known manner.

The free ends of the profiled arms are of semicircular shape, and their thickness tapers towards said ends.

The upper mouth of the body of the link, i.e. that side of this latter which is designed to constitute the working surface of the corresponding conveyor chain, is closed by a wall 6 which is associated with the open ring 1 and the two initial portions of the profiled arms 3.

More specifically, in a position corresponding with these latter, said wall 6 comprises an arcuate enlargement 7, of which the face is raised relative to the outer face of said wall.

That part of the wall 6 which closes the open ring 1 is provided in its front zone with a circumferential bevel 9.

From the outer marginal edges of this latter there rises a narrow rib 10, which leaves the central portion of said circumferential bevel free.

The outer surface of the wall 6 is coplanar with the upper faces of the profiled arms 3, which terminate in a small transverse step 11 lying lower than said outer surface (Figure 1).

The outer side face of each individual profiled arm 3 is provided with two longitudinal strengthening ribs 12.

On that zone of the wall 6 which is bounded by the upper strengthening ribs 12, the transverse steps 11, the enlargement 7 and the rib 10 there is disposed a metal plate 13 which in a position corresponding with the open ring 1 comprises a lower integral orthogonal rivet 14, which is inserted through the through bore 8.

The free end of said rivet is conveniently clinched in order to securely lock the plate 13 on to the link (Figure 3).

According to the invention, said metal plate is formed from a wear-resistant metal material, for example stainless steel or steel which has been surface-treated by case-hardening or nitriding.

As clearly shown in Figures 1 and 3, from the discoidal end of the plate 13 there branches a small arcuate lip 15 which is located above a convenient shoulder provided at the summit of the open ring 1 and lying between the two portions of the rib 10.

As an alternative embodiment of the invention shown in Figure 4, the arcuate lip 15 is provided lowerly with an inwardly projecting rim 150 housed in a respective recessed seat provided at the level of the said shoulder. In this case the rivet 14 and bore 8 are dispensed with.

The plate 13 also comprises two outer longitudinal appendices 16 which embrace the thickness of the wall 6 starting from the rib 10 to terminate at the upper longitudinal ribs 12 and the transverse steps 11.

Substantially, the anti-wear covering 13 is in the form of a protection cover for the respective link.

As shown in Figures 1, 3 and 5, the plate 13 is completed by two equal orthogonal lugs 17 branching from the outer edges of the elongated portions of the plate, to reach positions corresponding with the inner mouths of the transverse bores 4, at which each comprises a bore 12 for the passage of the hinge pin 5.

At this point it is apparent that the metal plate 13 safeguards the integrity of the link, so that the life of a chain equipped in this manner is much longer than the life of chains of the same type known up to the present time.

Finally, from a simple examination of the drawings it can
also be seen that the plate 13, if required and/or considered
convenient, can be replaced by a new plate when the preceding
plate is damaged or excessively worn.

PATENT CLAIMS

1.  A conveyor chain with an anti-wear covering, of the type comprising a plurality of links (1) which are arranged to swivel about respective hinge pins and in the respective planes in which they lie, and which are configured as a type of profiled fork, of which the opening is partially closed upperly on the working or conveying side of the link by means of an integral wall (6), characterised in that the working face of each link is covered by a wear-resistant plate (13) which is coupled both to the body of the link (1) and to the corresponding hinge pin.

2.  A chain as claimed in claim 1, characterised in that said wear-resistant plate (13) is in the form of a steel plate, of which the shape when viewed in plan corresponds to that of the link.

3.  A chain as claimed in claim 1, characterised in that the wear-resistant plate (13) is a profiled plate of surface-treated steel such as case-hardened or nitrided steel.

4.  A chain as claimed in claim 1, characterised in that said plate (13) is locked to the body of the link (1) by an orthogonal rivet (14) which branches from the lower face of the plate and is provided in proximity to the front end of said plate, and which is inserted through a respective bore (8) in the body of the link (1), beyond which it is conveniently deformed.

5.  A chain as claimed in claim 1, characterised in that said plate (13) is locked to the body of said link (1) by an inwardly projecting front rim (150) which penetrates into a recess provided in the front part of the body of the link (1).

6. A chain as claimed in claim 1, characterised in that in order to lock it to the surface of the respective link (1), said wear-resistant plate (13) comprises two orthogonal lugs (17) branching from the edges facing the elongated portions of said plate, and extending parallel to the inner faces of the forked link arms (3) in order to align two through bores (18) provided in them, with the normal connection bores (4) for the hinge pin (5).

7. A chain as claimed in claim 1, characterised in that the front and rear ends of said wear-resistant plate (13) are conveniently connected together.

1/2

0083119

Fig.1.

0083119

Fig. 2.

Fig. 3.

Fig. 5.

Fig. 4.

# European Patent Office

## EUROPEAN SEARCH REPORT

EP 82 20 1296

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 65 G 17/38 |
| A | GB-A-2 065 587 (HARVEY) *Page 1, lines 88-128; figures* | 1 | B 65 G 17/08 F 16 G 15/12 |
| | --- | | |
| A | US-A-3 944 059 (GARVEY) *Column 3, line 7 - column 4, line 65; figures 4-8* | 1,2,5 | |
| | --- | | |
| A | DE-A-2 428 620 (V.E.B.) *Page 4, lines 14-33; figures* | 1 | |
| | --- | | |
| A | FR-A-2 306 907 (GRILLO) *The whole document* | 1 | |
| | --- | | |
| A | US-A-3 881 593 (MUSHOVIC) *Column 3, line 12 - column 4, line 28; figures* | 1 | TECHNICAL FIELDS SEARCHED (Int. Cl. ³) |
| | --- | | |
| A | DE-A-2 150 777 (HENNIG) *The whole document* | 1 | F 16 G B 65 G |
| | ----- | | |

The present search report has been drawn up for all claims

| Place of search | Date of completion of the search | Examiner |
|---|---|---|
| THE HAGUE | 08-03-1983 | NADELHOFFER J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82